# EUROPEAN PATENT SPECIFICATION

(11) **EP 1 720 227 B1**
(45) Date of publication and mention of the grant of the patent: **10.08.2011**
(21) Application number: 06075959.4
(22) Date of filing: 27.04.2006
(51) Int. Cl.: H02G 3/04, H02G 3/08

(54) **Fixing system for fixing a box on a ladder track**
Befestigungsvorrichtung zum Befestigen einer Dose an einer Leiter
Système de fixation pour fixer une boîte sur une échelle

(30) Priority: 02.05.2005 NL 1028935
(43) Date of publication of application: 08.11.2006
(73) Proprietor: Attema B.V., 4203 NJ Gorinchem (NL)
(72) Inventor: de Hoog, Antonie, 4213 DE Dalem (NL)
(74) Representative: Mertens, Hans Victor

(56) References cited:
- US-A- 5 009 383
- US-A- 6 158 180
- US-B1- 6 252 171

## Description

The invention relates to a fixing system for fixing a box on a ladder track according to the preamble of claim 1. Such a box is in particular a box in which to connect together electrical cables and/or to which to connect electrical cables.

A fixing system of the above type is disclosed on Internet at: http://www.niedax.de/downloads/pdf/niedax/Allround_Kabelleitern.pdf > page 3. The known fixing system comprises a mounting plate denoted by reference KRMPV 280F from Niedax, Germany and fastening means, such as rivets, for fastening the mounting plate to a cable ladder. The mounting plate consists of a flat piece and two U-shaped brackets with first and second legs. The first leg of eache bracket is fastened to the flat piece, such that the brackets provide a space to receive a girder of a cable ladder in. The second legs of the brackets are provided at their free ends with holes and the flat piece and the first legs are provided with holes opposite the holes of the second legs. The holes are for passing through said fastening means, such that a girder of a cable ladder can be maintained between the legs of the brackets and the fastening means. The flat piece is suitable to mount a box of an electrical system on.

Another fixing system according to the introctional paragraph is disclosed on Internet at: http://www.wibe.se/doc/engelsk/cat_cable/out/english/cableladders/wc 504.htm. This prior system comprises a single piece of bent sheet metal denoted by Junction box plate 35S from Wibe, Sweden. The plate is bent to provide a channel which is suitable to partly receive therein a girder of a cable ladder. At a transition of the channel and a remaining flat part of the piece locking means are provided. When said girder has been received in the channel one can bend the locking tabs for maintaing the girder in the channel. The flat piece is suitable to mount a box of an electrical system on.

On Internet at: http://www.stago.nl/index.htm > Produkten > Documentatie > Ladderbaansysteem LB 4000 > page 18 a mounting system is disclosed which comprises a flat piece, which is denoted as mounting plate H35S for a cable ladder LB4000/60MM from Stago, The Netherlands. This mounting plate is fastened by bolts and nuts to a girder of a cable ladder.

On Internet at: http://www.mpbolagen.se/eng/industri/detalj.asp?Nr=53 a mounting system is disclosed which comprises a flat piece, which is denoted as mounting bracket MP-112B for a cable ladder from MPbolagen, Sweden. At locations where a girder of a cable ladder is to be mounted the mounting plate is provided with tabs. After locating the plate against the tabs are bent to pass through holes provided in the girder, so that the plate is maintained against the girder.

All prior art systems consist substantially of a single element and are formed by punching and bending out of metal sheet. As a result, they can easily have sharp edges and projections that can lead to injuries to a user, even before the user fits such a fixing system on a wire track. In addition, the metal construction means that the fixing system cannot be integral with a box, which is usually made of plastic.

A number of the known fixing systems are provided with lips. During the fitting a fitter holds the element against the side of a track and bends the lips over edges of side walls or of holes in the side walls of the track. Pliers or a hammer need to be used for bending over the lips. Such a fitting method is time-consuming and energy-consuming, and can lead to dangerous situations for the fitter when working on climbing equipment.

Some of the known fixing systems can be fitted on a track in a single operation. These known fixing systems are, however, suitable only for fitting on tracks meeting certain specifications as regards dimensions. Such fixing systems are therefore not universally usable for the many variants of ladder tracks on the market.

The object of the invention is to eliminate the abovementioned drawbacks of the known technique.

The abovementioned object is achieved according to the invention by providing a fixing system according to claim 1.

The abovementioned object is also achieved according to the invention by providing an integral combination of a base element of such a fixing system and a box according to claim 9.

Other features and advantages of the fixing system according to the invention will become clear from the explanation below of an embodiment of a fixing system according to the invention with reference to the appended drawings, in which:
Fig. 1 shows in perspective a disassembled view of a base element and a locking element forming a fixing system according to the invention;
Fig. 2 shows in perspective the fixing system of Fig. 1, viewed from an opposite side;
Fig. 3 shows in perspective the fixing system of Fig. 1, with the base element and the locking element pushed into each other and locked;
Fig. 4 shows the fixing system of Fig. 3, hanging on a horizontal beam of a ladder track; and
Fig. 5 shows the fixing system and the horizontal beam of a ladder track of Fig. 4 after fitting of the system on the track and of a box on the system.

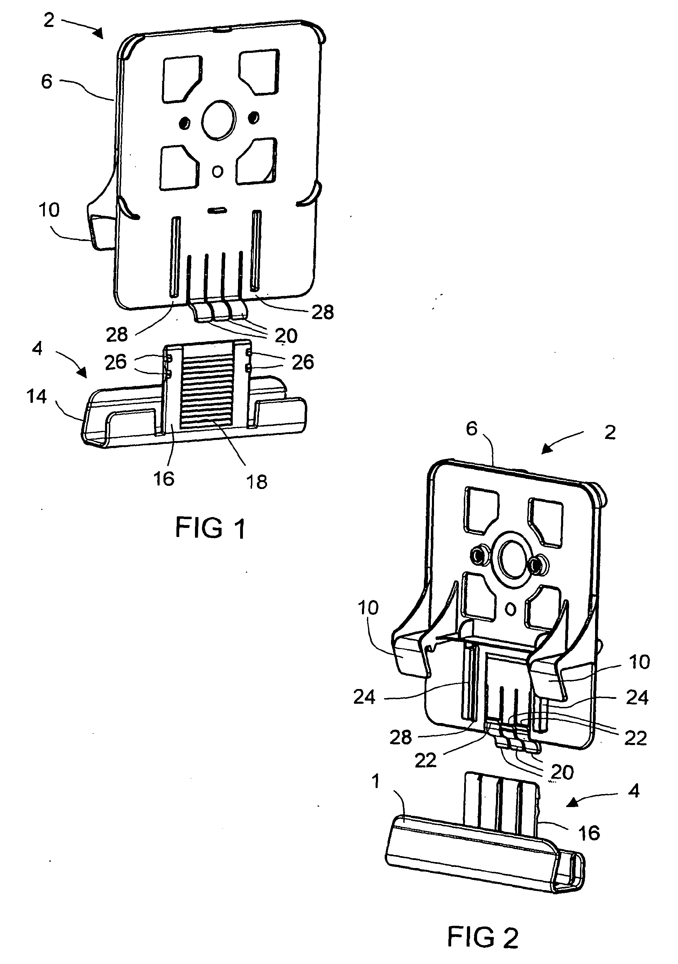

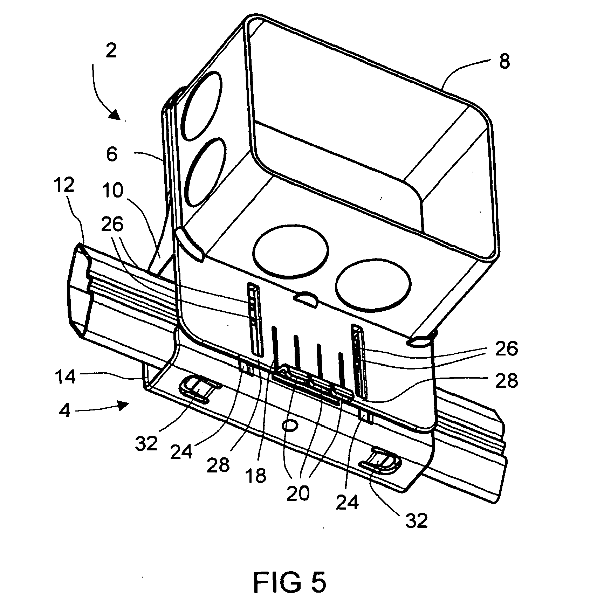

Fig. 1 shows in perspective an embodiment of a fixing system according to the invention, which consists of a base element 2 and a locking element 4. The base element 2 has a substantially flat base part 6 that is suitable for a box 8 to be fitted against it (Fig. 5). The box 8 is suitable, for example, for connecting electrical cables and other electrical components to each other in said box.

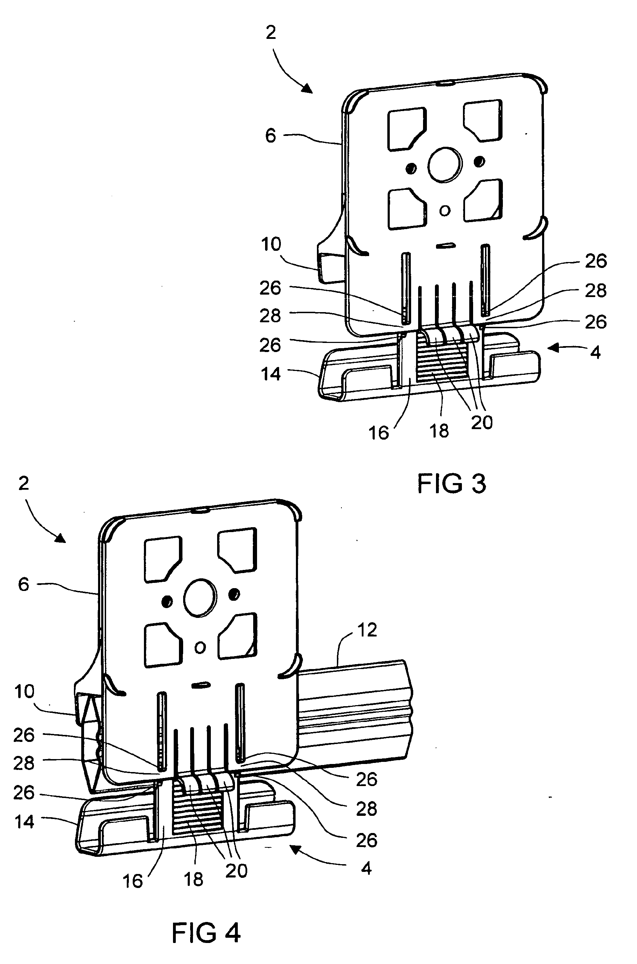

On one of the main sides, which in Fig. 1 is the rear side, the base element 2 has one or more hook members 10, which are suitable for hooking over a longitudinal girder or horizontal beam 12 (Figs. 4 and 5) of a ladder track. A ladder track is known and consists of two parallel longitudinal girders 12 and a number of cross girders provided at a distance from each other between the longitudinal girders 12. A ladder track is used for carrying and guiding electrical cables and for fixing components on the track. Only part of a longitudinal girder 12 of such a ladder track is shown in the figures.

The locking element 4 forms a hook member itself or is provided with at least one hook member 14. The hook member 14 is suitable for hooking over a longitudinal girder 12 of a ladder track.

The locking element 4 comprises a slide 16, a main face of which extends parallel to the base part 6 of a base element 2 to be connected to the locking element 4, and a main side of which is provided with a number of parallel elongate saw-tooth-shaped teeth 18, which are parallel to the bottom of the hook member 14. The base element 2 has lips 20, which extend parallel to a direction perpendicular to the bottom of the hook members 10, and which can move flexibly to some extent in a direction perpendicular to the base part 6. The teeth 22 are suitable for engaging upon the teeth 18.

The base part 6 of the base element 2 has on one of its main sides guide members, in particular guide grooves 24 with open sides facing each other and extending parallel to a direction perpendicular to the bottom of the hook members 10. The grooves 24 have locations and dimensions which are suitable for the accommodation therein of edge parts of the slide 16 of the locking element 4, in such a way that the slide 16 can be pushed into the guide grooves 24, so that the bottoms of the hook members 10 and 14 of the base element 2 and the locking element 4 respectively face each other.

When the slide 16 has been pushed sufficiently far into the guide members 24, the teeth 22 of the lips 20 will engage upon the teeth 18, with the result that a movement of slide 16 in the opposite direction is prevented. Only when the lips 20 are bent back sufficiently far from the slide 16 can the slide 16 be pushed back out of the guide members 24.

The locking element 4 preferably has at least one pair of locking lugs 26, which can engage upon a retaining part, in particular an edge part 28 of the base element 2. When, as shown in Fig. 3, the slide 16 of the locking element 4 is pushed over a suitable distance into the base element 2, the locking lugs 26 and the retaining part 28 can maintain the state achieved by the base element and the locking element. A fitter can reverse this locked state by exerting a sliding force that is sufficient to overcome the resistance offered by the locking lugs 26 and the retaining part 28. The resistance offered by the locking lugs 26 and 28 is such that they maintain the locked state at least during transport of the fixing system and until the moment that the fixing system is fitted against a ladder track. This means that the fitting of the fixing system according to the invention on a ladder track can be carried out easily and quickly, and therefore cheaply.

In order to connect a fixing system according to the invention to a longitudinal girder 12 of a ladder track, a fitter brings the fixing system, with the base part 6 at an angle relative to a central perpendicular plane of the ladder track, to the longitudinal girder 12, so that the longitudinal girder 12 can be passed through a space 30 between the hook members 10 and 14 until it is against the base part 6 of the base element 2. During this movement the base part 6 can be rotated about an axis parallel to the longitudinal girder 12. The fitter then pushes the locking element 4 with such force towards the base element 2 that the abovementioned locked state of the elements 2, 4 is released and the slide 16 of the locking element 4 can be pushed further into the guide members 24 of the base element 2. The locking element 4 is pushed as far as possible into the base element 2, so that the longitudinal girder 12 is confined to the maximum degree between the hook members 10 and 14.

Lips 32 are preferably formed in the bottom of at least one of the hook members 10 and 14, in the embodiment shown in the bottom of the hook member 14 (Fig. 5), which lips project above the bottom of the hook member 14 and towards the opposite hook member 10. The lips 32 can move flexibly towards and away from the latter hook member. After the fixing system has been fitted on a longitudinal girder 12 of a ladder track, the lips 32 are pushed against the longitudinal girder 12, with the result that the longitudinal girder 12 is retained with force between the hook members 10 and 14 and a stable position of the fixing system, in particular the base part 6 of the base element 2, is ensured.

The lips 32 of a hook member 10 and/or 14 preferably have on the sides facing the bottom of the other hook member a groove which extends parallel to the longitudinal girder 12 to be accommodated. This is advantageous for centring of the longitudinal girder 12 in the hook members 10, 14.

The base element preferably has several lips 20, each having at least one tooth 22, the tooth or teeth 22 of each lip 20 being staggered relative to the teeth 22 of the other lips 20 in a direction parallel to a sliding direction of the slide 16 over a distance that is less than a pitch of the teeth 22. In this way the teeth 18 and 22 provide more positions in which the elements 2 and 4 can be locked, which is advantageous for retaining the fixing system stably without play on the longitudinal girder 12. At the same time as this, or as an alternative, the teeth 18, 22 can then be made deeper, so that deformability of the material of the teeth is less important and great resistance to accidental sliding out of each other can be offered.

The base element 2 and the locking element 4 are preferably made of plastic, so that they are easy to produce, and sharp edges and projections on which a fitter could be injured can be avoided.

If the base element 2 is made of plastic and a box 8 for which it is intended is also made of plastic, it is possible to produce the base element 2 in combination with the box 8 as a single element, in particular by injection moulding. This obviates the necessity for fitting a separate box 8 on a separate fixing system.

Various modifications relative to the embodiment of the fixing system according to the invention illustrated and explained are possible within the scope of the appended claims, in which the invention is described. For example, numbers of hook members 10 and 14 other than those shown can be used. Several slides 16 and lips 20 lying opposite each other and interacting with said slides can also be used. A slide 16 can be fitted on the base element 2 in a different way from that shown, and one or more lips 20 having teeth 22 and designed to interact with said slide can be formed on the locking element 4. If several slides 16 are used, they need not all be fitted on the same element 2 or 4. The locking lugs 26 and retaining parts interacting with them can be fitted on the respective other elements 2, 4. Furthermore, a person skilled in the art may use different stop means within the scope of the invention instead of the teeth 18 of the slide 16 and the lips 20 with teeth 22.

## Claims

1. Fixing system for fixing a box (8) on a ladder track, which is composed of two longitudinal girders (12) and cross girders fitted transversely between the longitudinal girders, comprising a substantially flat base part (6) which is suitable for the box to be fitted against a first main side thereof, the base part having engaging elements (10) which are suitable for gripping over edges of a longitudinal girder, **characterized in that** it comprises a base element (2) and a locking element (4), in which the base element comprises the base part, the base element has on its second main side situated opposite the first main side at least one first hook member (10) which is suitable for hooking over a longitudinal girder, the locking element has at least one second hook member (14) facing in the opposite direction to that of the first hook member and suitable for hooking over a longitudinal girder, at least one (4) of the elements has a slide (16) facing the other element (2), at least the other element (2) has guide members (24), the slide and the guide members are suitable for pushing into each other and permitting a movement of the elements perpendicular to a main face of the track, and the slide of the one element and the other element have locking members which prevent the elements (2,4) from sliding back after they have been pushed into each other.

2. Fixing system according to claim 1, **characterized in that** the locking members comprise substantially immovable first teeth (18) of one (4) of the elements and second teeth (22) of the other element (2) facing in the opposite direction from that of the first teeth and movable flexibly to and from the first teeth.

3. Fixing system according to claim 2, **characterized in that**, viewed in the sliding direction of the slide (16) a number of the second teeth (22) are staggered over a distance of less than a tooth pitch and the staggered second teeth are suitable for engaging one at a time fully behind a first tooth.

4. Fixing system according to claim 3, **characterized in that** the second teeth (22) are fitted on lips (20) which are suitable for bending flexibly by a user in order to make the second teeth engage with or disengage from the first teeth.

5. Fixing system according to a preceding claim, **characterized in that** at least one (14) of the hook members (10,14) has on its bottom at least one lip (32) facing the other hook member (10) which is suitable for bending flexibly in a direction away from and towards the bottom of the other hook member and for confining a longitudinal girder (12) between the bottoms of the hook members.

6. Fixing system according to claim 5, **characterized in that** the
lip (32) for confining a longitudinal girder (12) has on a side facing the longitudinal girder a groove which is suitable for accommodating therein a longitudinal edge of the longitudinal girder.

7. Fixing system according to a preceding claim, **characterized in that** the elements (2,4) have locking members which are suitable for pushing the elements into each other over such a distance and holding them there in such a way that hooking over a longitudinal girder (12) of a ladder track is permitted and the locking members offer resistance to further pushing into each other, which resistance can be overcome by manual effort.

8. Fixing system according to a preceding claim, **characterized in that** the base element(2) and the locking element (4) are made of plastic.

9. Box (8) suitable for use in combination with a ladder track and provided with an integral base element (2) of a fixing system according to one of the preceding claims.

## Patentansprüche

1. Befestigungssystem zum Befestigen eines Kastens (8) an einer Leiterschiene, die aus zwei Längsträgern (12) und Querträgern besteht die quer zwischen die Längsträger eingefügt sind, enthaltend einen im wesentlichen flachen Basisteil (6), der sich dazu eignet, den Kasten an einer ersten Hauptseite desselben einzufügen, wobei der Basisteil Eingreifelemente (10) hat, die sich dazu eignen, über Ränder eines Längsträgers zu greifen,
**dadurch gekennzeichnet, dass**
er ein Basiselement (2) und ein Verriegelungselement (4) enthält, wobei das Basiselement den Basisteil enthält, auf der zweiten Hauptseite des Basiselementes gegenüberliegend der ersten Hauptseite wenigstens ein erstes Hakenelement (10) angeordnet ist, das sich zum Haken über einen Längsträger eignet, das Verriegelungselement wenigstens ein zweites Hakenelement (14) hat, das in die entgegengesetzte Richtung zu jener des ersten Hakenelementes weist und sich dazu eignet, über einen Längsträger gehakt zu werden, wenigstens eines (4) der Elemente einen Gleiter (16) hat, der dem anderen Element (2) zugewandt ist, wenigstens das andere Element (2) Führungselemente (24) hat, sich der Gleiter und die Führungselemente dazu eignen, ineinander gedrückt zu werden und eine Bewegung der Elemente senkrecht zu einer Hauptfläche der Schiene gestatten, und der Gleiter des einen Elementes sowie das andere Element Verriegelungseinrichtungen haben, die verhindern, dass die Elemente (2, 4) zurückgleiten, nachdem sie ineinander gedrückt worden sind.

2. Befestigungssystem nach Anspruch 1, **dadurch gekennzeichnet, dass** die Verriegelungselemente im wesentlichen unbewegliche erste Zähne (18) eines (4) der Elemente und zweite Zähne (22) des anderen Elementes (2) enthalten, die in die entgegengesetzte Richtung von jener der ersten Zähne weisen und auf die ersten Zähne zu und von diesen weg flexibel beweglich sind.

3. Befestigungssystem nach Anspruch 2, **dadurch gekennzeichnet, dass**, in Gleitrichtung des Gleiters (16) gesehen, eine Anzahl zweiter Zähne (22) über eine Distanz gestaffelt ist, die geringer ist als eine Zahnteilung, und sich die gestaffelten zweiten Zähne dazu eignen, nacheinander vollständig hinter einen ersten Zahn zu greifen.

4. Befestigungssystem nach Anspruch 3, **dadurch gekennzeichnet, dass** die zweiten Zähne (22) an Zungen (20) angebracht sind, die sich dazu eignen, von einem Benutzer flexibel gebogen zu werden, um die zweiten Zähne mit den ersten Zähnen in Eingriff zu bringen, oder von diesen zu lösen.

5. Befestigungssystem nach einem der vorhergehenden Ansprüche, **dadurch gekennzeichnet**, das wenigstens eines (14) der Hakenelemente (10, 14) auf seiner Unterseite wenigstens eine Zunge (32) hat, die dem anderen Hakenelement (10) zugewandt ist und sich zum flexiblen Biegen in einer Richtung von der Unterseite des anderen Hakenelementes und darauf zu und zum Aufnehmen eines Längsträgers (12) zwischen den Unterseiten der Hakenelemente eignet.

6. Befestigungssystem nach Anspruch 5, **dadurch gekennzeichnet, dass** die Zunge (32) zum Aufnehmen eines Längsträgers (12) auf einer Seite, die dem Längsträger zugewandt ist, eine Rille hat, die sich dazu eignet, darin eine Längsrand des Längsträgers aufzunehmen.

7. Befestigungssystem nach einem der vorhergehenden Ansprüche, **dadurch gekennzeichnet, dass** die Elemente (2, 4) Verriegelungselemente haben, die sich dazu eignen, die Elemente über einer derartige Distanz ineinander zu drücken und sie in dieser Stellung derart zu halten, dass ein Einhaken über einen Längsträger (12) einer Leiterschiene möglich ist, und die Verriegelungselemente einen Widerstand gegen weiteres Drücken ineinander bieten, wobei dieser Widerstand durch manuelle Kraft überwunden werden kann.

8. Befestigungssystem nach einem der vorhergehenden Ansprüche, **dadurch gekennzeichnet, dass** das Basiselement (2) und das Verriegelungselement (4) aus Kunststoff bestehen.

9. Kasten (8), der sich für die Verwendung in Kombination mit einer Leiterschiene eignet und mit einem integralen Basiselement (2) eines Befestigungssystems gemäß einem der vorhergehenden Ansprüche versehen ist.

## Revendications

1. Système de fixation pour fixer une boîte (8) sur une échelle qui est composée de deux poutres longitudinales (12) et de poutres transversales montées transversalement entre les poutres longitudinales, comprenant une partie de base (6) sensiblement plate qui est appropriée pour que la boîte soit montée contre son premier côté principal, la partie de base ayant des éléments de mise en prise (10) qui sont appropriés pour être montés sur les bords d'une poutre longitudinale,
**caractérisé en ce que** :
il comprend un élément de base (2) et un élément de blocage (4), dans lequel l'élément de base comprend la partie de base, l'élément de base a sur son deuxième côté principal, positionné à l'opposé du premier côté principal, au moins un premier élément formant crochet (10) qui est approprié pour s'accrocher sur une poutre longitudinale, l'élément de blocage a au moins un deuxième élément formant crochet (14) orienté dans la direction opposée à celle du premier élément formant crochet et approprié pour s'accrocher sur une poutre longitudinale, au moins l'un (4) des éléments a une glissière (16) faisant face à l'autre élément (2), au moins l'autre élément (2) a des éléments de guidage (24), la glissière et les éléments de guidage sont appropriés pour se pousser les uns dans les autres et permettre un mouvement des éléments perpendiculaires à une face principale de la voie, et les glissières du premier élément et de l'autre élément ont des éléments de blocage qui empêchent les éléments (2, 4) de reculer en coulissant après qu'ils ont été poussés l'un dans l'autre.

2. Système de fixation selon la revendication 1, **caractérisé en ce que** les éléments de blocage comprennent des premières dents (18) sensiblement immobiles de l'un (4) des éléments et des deuxièmes dents (22) de l'autre élément (2) orientées dans la direction opposée à celle des premières dents et mobiles de manière flexible vers et depuis les premières dents.

3. Système de fixation selon la revendication 2, **caractérisé en ce que**, observées dans la direction de coulissement de la glissière (16), un certain nombre de deuxièmes dents (22) sont décalées sur une distance inférieure à un pas de dent et les deuxièmes dents décalées sont appropriées pour se mettre en prise une par une, complètement derrière une première dent.

4. Système de fixation selon la revendication 3, **caractérisé en ce que** les deuxièmes dents (22) sont montées sur des lèvres (20) qui sont appropriées pour le pliage flexible par un utilisateur de sorte que les deuxièmes dents se mettent en prise avec ou se dégagent des premières dents.

5. Système de fixation selon une revendication précédente, **caractérisé en ce qu'**au moins l'un (14) des éléments formant crochet (10, 14) a, sur son fond, au moins une lèvre (32) faisant face à l'autre élément formant crochet (10) qui est approprié pour se plier de manière flexible dans une direction à distance de et vers le fond de l'autre élément formant crochet et pour confiner une poutre longitudinale (12) entre les fonds des éléments formant crochet.

6. Système de fixation selon la revendication 5, **caractérisé en ce que** la lèvre (32) pour confiner une poutre longitudinale (12) a, sur un côté faisant face à la poutre longitudinale, une rainure qui est appropriée pour loger à l'intérieur de cette dernière, un bord longitudinal de la poutre longitudinale.

7. Système de fixation selon une revendication précédente, **caractérisé en ce que** les éléments (2, 4) ont des éléments de blocage qui sont appropriés pour pousser les éléments l'un dans l'autre, sur une distance et les maintenir là de sorte que l'accrochage sur une poutre longitudinale (12) d'une échelle est autorisé et les éléments de blocage offrent la résistance pour se pousser davantage les uns dans les autres, laquelle résistance peut être maîtrisée par un effort manuel.

8. Système de fixation selon une revendication précédente, **caractérisé en ce que** l'élément de base (2) et l'élément de blocage (4) sont réalisés à partir d'une matière plastique.

9. Boîte (8) appropriée pour être utilisée en combinaison avec une échelle et prévue avec un élément de base solidaire (2) d'un système de fixation selon l'une quelconque des revendications précédentes.
